# EUROPEAN PATENT SPECIFICATION

(11) **EP 3 952 208 B1**
(45) Date of publication and mention of the grant of the patent: **01.10.2025**
(21) Application number: 20189303.9
(22) Date of filing: 04.08.2020
(51) Int. Cl.: H04L 12/14, H04M 15/00, H04W 4/24

(54) **METHOD FOR PROVIDING IMPROVED CHARGING CAPABILITIES REGARDING AT LEAST ONE MOBILE COMMUNICATION NETWORK WHOSE FUNCTIONALITY IS AT LEAST PARTLY PROVIDED BY MEANS OF A CLOUD INFRASTRUCTURE, MOBILE COMMUNICATION NETWORK, CLOUD INFRASTRUCTURE, PROCEDURE CHARGING SYSTEM, PROGRAM AND COMPUTER-READABLE MEDIUM**
VERFAHREN ZUR BEREITSTELLUNG VERBESSERTER RECHNUNGSFÄHIGKEITEN BEZÜGLICH MINDESTENS EINES MOBILEN KOMMUNIKATIONSNETZWERKS, DESSEN FUNKTIONALITÄT ZUMINDEST TEILWEISE MITTELS EINER CLOUD-INFRASTRUKTUR BEREITGESTELLT WIRD, MOBILES KOMMUNIKATIONSNETZWERK, CLOUD-INFRASTRUKTUR, PROZEDURLADESYSTEM, PROGRAMM UND COMPUTERLESBARES MEDIUM
PROCÉDÉ POUR FOURNIR DES CAPACITÉS DE TARIFICATION AMÉLIORÉES CONCERNANT AU MOINS UN RÉSEAU DE COMMUNICATION MOBILE DONT LA FONCTIONNALITÉ EST AU MOINS PARTIELLEMENT FOURNIE AU MOYEN D'UNE INFRASTRUCTURE EN NUAGE, RÉSEAU DE COMMUNICATION MOBILE, INFRASTRUCTURE EN NUAGE, SYSTÈME DE TARIFICATION DE PROCÉDURE, PROGRAMME ET SUPPORT LISIBLE PAR ORDINATEUR

(43) Date of publication of application: 09.02.2022
(73) Proprietor: Deutsche Telekom AG, 53113 Bonn (DE)
(72) Inventor: COLOM IKUNO, Josep, 2100 Korneuburg (AT); TSAI, Bernard, 65203 Wiesbaden (DE)
(74) Representative: Schwöbel, Thilo K.

(56) References cited:
- EP-A1- 3 471 337
- US-A1- 2018 220 276
- HUAWEI TECHNOLOGIES: "pCR TR 32.899 Network Slicing", vol. SA WG5, no. West Palm Beach,Florida(US); 20170508 - 20170512, 7 May 2017 (2017-05-07), XP051260136, Retrieved from the Internet <URL:http://www.3gpp.org/ftp/Meetings_3GPP_SYNC/SA5/Docs/> [retrieved on 20170507]

## Description

### BACKGROUND

The present invention relates a method for providing improved charging capabilities regarding at least one mobile communication network whose functionality is at least partly provided by means of a cloud infrastructure, wherein the at least one mobile communication network comprises a radio access network and a core network, the core network being realized as a core network instance provided by the cloud infrastructure, the core network instance comprising a plurality of network functions.

Furthermore, the present invention relates to a mobile communication network for providing improved charging capabilities regarding the mobile communication network, the functionality of which is at least partly provided by means of a cloud infrastructure, wherein the at least one mobile communication network comprises a radio access network and a core network, the core network being realized as a core network instance provided by the cloud infrastructure, the core network instance comprising a plurality of network functions.

Additionally, the present invention relates to a cloud infrastructure and a procedure charging system for providing improved charging capabilities regarding at least one mobile communication network whose functionality is at least partly provided by means of the cloud infrastructure, wherein the at least one mobile communication network comprises a radio access network and a core network, the core network being realized as a core network instance provided by the cloud infrastructure, the core network instance comprising a plurality of network functions.

Furthermore, the present invention relates to a program and to a computer-readable medium for providing improved charging capabilities regarding at least one mobile communication network whose functionality is at least partly provided by means of a cloud infrastructure according to the inventive method.

One of the considered deployment scenarios of a mobile communication network (or of a plurality of mobile communication networks) according to the 5G (fifth generation) standard is that of a deployment (of such a network of of such networks or of at least the core network part thereof) in a public or private cloud operator with a Software as a Service (SaaS), service model.
In such a SaaS model, the client or tenant (or consumer) of such infrastructure resources does typically not manage or control the underlying cloud infrastructure including the (physical) network, (physical) servers, operating systems, storage, or even individual application capabilities. Typically, a fee, such as a flat fee, is charged, e.g., per end user (of the client or tenant).
A further evolution of this concept is serverless computing and Function as a Service (FaaS). In these service models, the cloud provider (or infrastructure provider) fully manages starting and stopping virtual machines as necessary to serve requests, and usage of the cloud infrastructure (such as requests or the like) are typically billed by an abstract measure of the resources required (e.g. API function calls) to satisfy the corresponding requests, rather than per virtual machine, or per hour, etc.

However, such known charging models typically do not reflect the particularities of the typical usage of control planes of such mobile communication networks. Examples of related prior art are: EP3471337, US 2018/220276 and XP051260136.

### SUMMARY

An object of the present invention is to provide a technically simple, effective and cost effective solution for providing improved charging capabilities regarding at least one mobile communication network whose functionality is at least partly provided by means of a cloud infrastructure, especially implementing an approach or mechanism regarding a realistic and appropriate charging. A further object of the present invention is to provide a corresponding mobile communication network, a corresponding cloud infrastructure, a corresponding procedure charging system, and a corresponding program and computer-readable medium.

The object of the present invention is achieved by by the appended independent claims. Dependent claims constitute embodiments of the invention.

It is thereby advantageously possible according to the present invention to enable a network-slice-aware, procedure-based charging for multi-tenant cloud-based core-as-a-service deployments. According to the present invention, a method (and a corresponding mobile communication network, cloud infrastructure, and procedure charging system) is provided in order to realize - especially for situations of a mobile network core being realized or deployed as a managed service, i.e. as a core network instance within a cloud infrastructure - a flexible and appropriate charging model (and/or especially a plurality of tenant-adapted such charging models) between the core operator (e.g. cloud provider) of the cloud infrastructure on the one hand, and the network operator (e.g. virtual mobile operator, or tenant of such a cloud infrastructure) of such a network core instance (or of a plurality of such network core instances.

Conventionally, charging on the basis of user plane traffic (e.g. per data volume of transferred (user plane) traffic) is possible and implemented. A charging scenario or strategy related to control plane data or events that would be based on a per API call charging would not make much sense as, e.g., some realistic conditions or situations may trigger a multitude of notifications (or API calls) that would, however, have little to do with the associated traffic generated by the customer and/or with the associated effort within the core infrastructure. Hence, all such strategies have the drawback of typically not appropriately reflecting the efforts (and costs) involved in a cloud infrastructure especially providing mainly control plane signalling regarding, preferably, a plurality of different core network instances. Hence, the present invention provides a charging model reflecting the particularities of mobile systems' (especially core network's) control plane. and a method how charging for a managed network core instance offering is able to be efficiently achieved.

According to the present invention, it is advantageously possible that several mobile operators (i.e. tenants of the cloud infrastructure) have their core network instance deployed in the same cloud infrastructure, each one with different agreed charging models and/or prices. Each of such operators may be using different network slices, typically each with different quality-of-service (QoS) requirements, likewise typically resulting in different prices. Additionally, private networks with arbitrary Public Land Mobile Network IDs (PLMN identifiers) may also use such a cloud deployment or cloud infrastructure.

According to the present invention, charging or billing is based on procedures performed and/or terminated and/or completed and/or started by network functions within or as part of the core network instances. Each such specific kind of procedure (e.g. user equipment attach) entails a known set of API calls or exchanged messages. It is thereby advantageously possible according to the present invention that a customer of such a cloud infrastructure is able to be shared (hence, needs to pay) precisely for the utilized resources without being necessarily aware of the virtualization/infrastructure layer at all. Additionally, it is advantageously possible according to the present invention that the customer of such a cloud infrastructure (i.e. a tenant, typically being the network operator of the core network being or being realized by the core network instance) is provided with much more fine-granular cost data; it is, hence, advantageously possible according to the present invention to use this information for the cloud infrastructure provider and/or for the tenants to optimize business and service offerings.

According to the present invention, it is advantageously possible and preferred that
-- besides the core network, at least one further core network of a further mobile communication network is realized as the core network instance, or
-- the cloud infrastructure provides - besides the core network instance - at least one further core network instance, the further core network instance realizing at least one further core network of a further mobile communication network, wherein the procedure termination indication is related to - besides the specific kind of procedure - the respective core network instance,
wherein especially the core network comprise or realize, besides a first network slice, at least a second network slice, and/or especially the further core network comprise or realize, besides a third network slice, at least one fourth network slice, wherein the procedure termination indication is related to - besides the specific kind of procedure - the respective core network instance and/or to the respective network slice.

It is thereby advantageously possible to realize economies of scale by means of realizing a plurality of core network instances within the cloud infrastructure.

According to a first alternative of the present invention, the procedure charging system comprises a procedure charging tracking function and at least one procedure state tracking function in centralized form,
wherein the transmission of the procedure termination indication is realized by means of the procedure state tracking function receiving - upon the execution of procedures by the core network instance and/or one or a plurality of its network functions - a first procedure termination indication from the respective network function, and by means of the procedure state tracking function transmitting a second procedure termination indication to the procedure charging tracking function.

It is thereby advantageously possible according to the present invention to efficiently realize the inventive method.

According to a second alternative of the present invention, the procedure charging system comprises the at least one procedure state tracking function in a de-centralized form with a procedure state tracking function module integrated in a plurality of network functions, respectively
wherein the transmission of the procedure termination indication is realized by means of the respective procedure state tracking function module receiving - upon the execution of procedures by the respective core network instance and/or the respective network function - the first procedure termination indication from the respective network function, and by means of the procedure state tracking function module transmitting the second procedure termination indication to the procedure charging tracking function.

According to the present invention in addition to the procedure state tracking function or the procedure state tracking function module receiving the first procedure termination indication from the respective network function, the procedure state tracking function or the procedure state tracking function module also receives a procedure start indication, after which the respective procedure is registered as started or as in progress.

Thereby, it is advantageously possible to not only detect the termination of a procedure but also the start or initiation of the procedure.

Furthermore, it is advantageously possible and preferred according to the present invention that
-- either the cloud infrastructure comprises the procedure charging system, and the procedure charging system processes a plurality of procedure termination indications related to both the core network instance and the further core network instance,
-- or the core network instance comprises the procedure charging system and the further core network instance comprises a further procedure charging system,
-- or different procedure charging systems are used for different network slices of the core network instance and/or of the further core network instance.

Thereby, it is advantageously possible according to the present invention to efficiently realize the inventive method.

Furthermore according to the present invention, it is preferred that in order for the procedure charging system, especially the procedure charging tracking function, to provide charging information and/or an amount information, the procedure charging tracking function receives:
-- the second procedure termination indication from the procedure state tracking function and/or from the procedure state tracking function modules regarding the respective executed procedures, as well as
-- procedure cost information, especially as dependent on the core network instance and/or dependent on the respective network slice used and/or dependent on the respective executed procedures.

Thereby, it is advantageously possible according to the present invention to efficiently realize the inventive method and to provide a fine-grained charging.

According to a further preferred embodiment of the present invention, in order for the procedure charging system, especially the procedure charging tracking function, to apply cost limits, the procedure charging system and/or the procedure charging tracking function triggers
-- the rejection of requested procedures and/or
-- the rejection or disabling of user equipments to access a core network instance or a network slice thereof and/or
-- the release of protocol data unit sessions, PDU sessions, regarding a core network instance or a network slice thereof,
especially after a predefined cost limit regarding a core network instance or a network slice thereof has been detected to be exceeded by the procedure charging system.

Furthermore, the present invention relates to a procedure charging system according to claim 6, a cloud infrastructure comprising such a procedure charging system, and a mobile communication network, the functionality of which is at least partly provided by means of a cloud infrastructure comprising a procedure charging system according to claim 6.

Still additionally, the present invention relates to a program comprising a computer readable program code which, when executed on a computer and/or on a network node of a cloud infrastructure and/or on a network function and/or on a procedure charging system, or in part on a network node of a cloud infrastructure and/or in part on a network function and/or in part on a procedure charging system, causes the computer and/or the cloud infrastructure and/or the network function and/or the procedure charging system to perform the inventive method.

Furthermore, the present invention relates to a computer-readable medium comprising instructions which when executed on a computer and/or on a network node of a cloud infrastructure and/or on a network function and/or on a procedure charging system, or in part on a network node of a cloud infrastructure and/or in part on a network function and/or in part on a procedure charging system, causes the computer and/or the cloud infrastructure and/or the network function and/or the procedure charging system to perform the inventive method.

### BRIEF DESCRIPTION OF THE DRAWINGS

Figure 1 schematically illustrates an example of a telecommunications network or a mobile communication network, namely a schematically represented 5G system, connected to a data network.
Figure 2 schematically illustrates the exemplary situation of a plurality of mobile communication networks - also exemplarily 5G core networks - being provided an example of a part of the telecommunications network, whose core network functionality is provided by a cloud platform or cloud infrastructure.
Figure 3 schematically illustrates an example of a procedure charging system according to a first alternative of the present invention (centralized form of the procedure state tracking function).
Figure 4 schematically illustrates an example of a procedure charging system according to a second alternative of the present invention (de-centralized form of the procedure state tracking function).
Figures 5 to 8 schematically illustrate additional examples of communication diagrams implementing the present invention.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

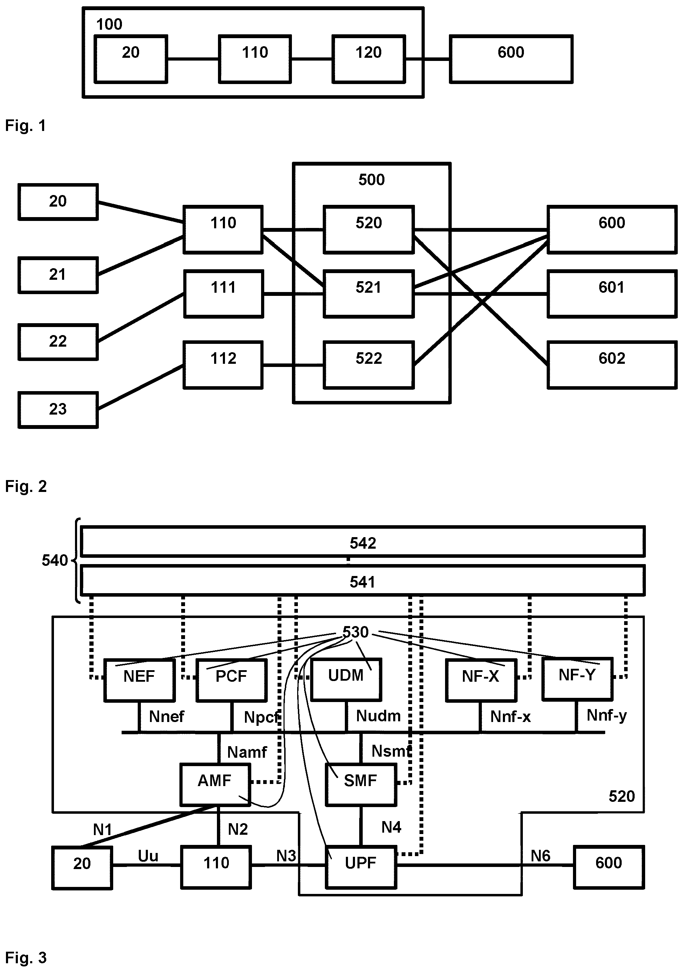

In Figure 1, a telecommunications network or mobile communication network 100 comprising a user equipment 20, an access network 110 and a core network 120 is schematically represented. Especially, the case of a 5G system as an example of the mobile communication network 100 is represented. The mobile communication network 100 or 5G system is furthermore connected to a data network 600, such as the internet. In the situation represented in Figure 1, the mobile communication network 100 - comprising the (or its) access network 110 and the (or its) core network 120 - might be realized by means of the core network 120 being implemented as a physical core network 120, i.e. typically having a plurality of physical network nodes that collectively provide the functionality of the core network 120, and are, typically, owned and/or deployed and/or operated by the network operator. Alternatively, the core network 120 of the mobile communication network 100 might also be realized by means of a cloud infrastructure such that the network nodes (and/or network functions) are provided or realized as virtualized network nodes (and/or network functions) of a core network instance provided by the cloud infrastructure such that - while the cloud infrastructure comprises physical computing nodes - the functionality of the core network 120 is provided or realized by the respective core network instance (realized within or provided by the cloud infrastructure). However, from the perspective of a user equipment 20 connected to the mobile communication network 100 (or being, while connected or registered, part of the mobile communication network 100), it is typically not detectable (or in any case it makes no difference) whether the core network 120 is realized as a physical (or at least in part physical) core network or whether the core network 120 is actually provided as a (virtualized) core network instance. Hence, according to the present invention, a 5G system 5GS is exemplarily considered, consisting of one or a plurality of user equipments connected to the data network 600 (e.g. the internet) via the access network 110 (e.g. gNodeBs based on 5G new radio spectrum and/or WiFi access) and the core network 120 connecting the access network 110 to the data network 600.

In Figure 2, an exemplary situation of a plurality of mobile communication networks is schematically represented whose core network functionality or functionalities is/are provided by a cloud platform or cloud infrastructure 500. In the exemplary scenario shown in Figure 2, the mobile communication network 100 comprises the access network 110 and the core network, the core network being realized (or its functionality provided) by a core network instance 520. A further mobile communication network comprises a further access network 111 and a further core network, the further core network being realized (or its functionality provided) by a further core network instance 521. A still further (or third) mobile communication network comprises a still further (or third) access network 112 and a still further (or third) core network, the still further (or third) core network being realized (or its functionality provided) by a still further (or third) core network instance 522. The mobile communication networks schematically represented in Figure 2, especially as 5G system, are furthermore connected to data networks, besides the data network 600, a further data network 601, and a still further (or third) data network 603. A plurality of user equipments are schematically shown connected to the respective mobile communication networks represented in Figure 2, namely, besides the user equipment 20 (being connected to the mobile communication network 100), a further user equipment 21, likewise being connected to the mobile communication network 100 (i.e. to its access network 110), a still further (or third) user equipment 22, being connected to the further mobile communication network (i.e. to its further access network 111), and a fourth user equipment 23, being connected to the still further (or third) mobile communication network (i.e. to its still further (or third) access network 112). Typically, according to the present invention, an "as a Service" offering of a core network (i.e. a core network instance 520, 521, 522, offering the functionality of a physically implemented core network, and provided as part of or within a cloud infrastructure) is likely to be able to achieve economies of scale in case that a plurality of core network instances 520, 521, 522 are provided by the cloud infrastructure 500; hence, such a scenario is likely to involve multiple tenants of the cloud infrastructure 500. The sharing of access networks (RAN, radio access networks) is comparatively often used in mobile communication networks; the schematical representation of a connection graph in Figure 2 shows the user equipments 20, 21, 22, 23, having, respectively, subscriptions to the different core networks or, rather, core network instances 520, 521, 522, which are hosted on the cloud infrastructure 500 of an "as a service" provider. Ultimately, each subscriber (or user equipment 20, 21, 22, 23) lands at or reaches the core network instance 520, 521, 522 where it has a subscription and each core network instance 520, 521, 522 provides connectivity to specific data network 600, 601, 602.

According to the present invention, a method for providing improved charging capabilities regarding at least one mobile communication network 100 (but preferably regarding a plurality of mobile communication networks) is provided.
In order to enable that the cloud provider (i.e. the provider of the cloud infrastructure 500) can charge each operator (i.e. each of its tenants with respect to one or a plurality of core network instances 520, 521, 522) for the functional resources of the cloud infrastructure 500 it consumes (or, rather, its end customers or subscribers consume), the operator of the cloud infrastructure need be aware of the performed procedures.

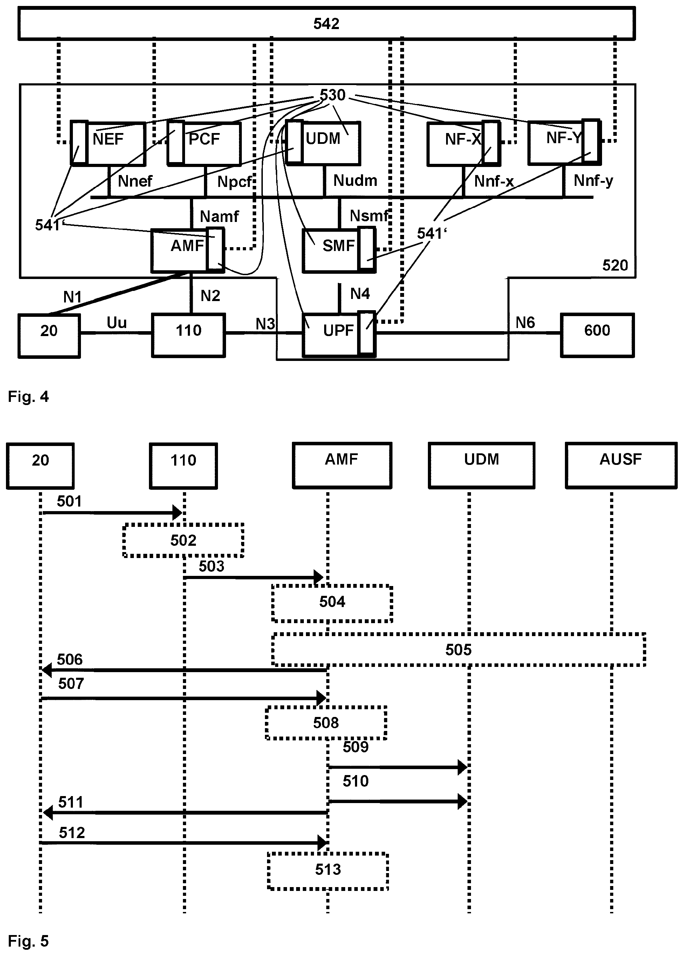

According to the present invention, this is realized by means of the cloud infrastructure 500 and/or the core network instance 520 comprising a procedure charging system 540, cf. Figures 3 and 4. The core network 120 (of the mobile communication network 100) - comprising a plurality of network functions 530 (cf. Figures 3 and 4) - is realized as or being the core network instance 520 provided by the cloud infrastructure 500, and the procedure charging system 540 enabling the charging capabilities by means of detecting, regarding at least one specific kind of procedure provided by the core network 120, the execution of procedures by the core network instance 520 530, wherein the core network instance 520 530 transmit a procedure termination indication to the procedure charging system 540, wherein the procedure termination indication is related to the specific kind of procedure.

The procedure charging system 540 comprises a procedure charging tracking function 542 and at least one procedure state tracking function 541. This is schematically shown in Figures 3 and 4, representing examples of the procedure charging system 540 according to a first embodiment of the present invention (Figure 3), and according to a second embodiment of the present invention (Figure 4).

Hence, according to the present invention, the procedure charging system 540 comprises a procedure state tracking function 541, and a procedure charging tracking function 542. The procedure state tracking function 541 is tasked with tracking the start and completion of procedures based on the sent/received messages; this is able to be implemented as a central component (e.g. log collection system) or be integrated within a network function (i.e. the network function signals start/completion of procedures; e.g. access and mobility management functions report user equipment registrations and session management functions report secondary authorization/authentication by a data network AAA (Authentication, Authorization, Accounting)). The procedure charging tracking function 542 is based on the reported started/completed procedures; this entity calculates the cost of the procedures.

The transmission of the procedure termination indication is realized by means of the procedure state tracking function 541 receiving - upon the execution of procedures by the core network instance 520 and/or one or a plurality of its network functions 530 - a first procedure termination indication from the respective network function 530, and by means of the procedure state tracking function 541 transmitting a second procedure termination indication to the procedure charging tracking function 542.

According to the first alternative of the present invention, represented in Figure 3, the procedure state tracking function 541 is realized in centralized form, i.e. the different network functions 530 report centrally to the procedure state tracking function 541 as shown in Figure 3. Together with the procedure charging tracking function 542, the procedure state tracking function 541 is represented as being part of the procedure charging system 540. Figure 3 shows, besides the user equipment 20 (having an N1 interface or reference point towards the core network instance 520, and a Uu interface or reference point towards the access network), the access network 110 (having an N2 interface or reference point towards the access and mobility management function of the core network interface 520, and an N3 interface or reference point towards the user plane function of the core network interface 520), and the data network 600 (having an N6 interface or reference point towards the core network interface 520), the core network instance 520 (of or used by the mobile communication network 100) and its main network functions 530 or components, namely: a network exchange function (NEF), having a Nnef interface or reference point; a policy and charging function (PCF), having a Npc interface or reference point; a unified data management (UDM), having a Nudm interface or reference point; a access and mobility management function (AMF), having a Namf interface or reference point; a session management function (SMF), having a Nsmf interface or reference point; and further network functions (NF-X, NF-Y), having, respectively Nnf-x and Nnf-y interfaces or reference points.

According to the second alternative of the present invention, represented in Figure 4, the procedure state tracking function 541 is realized in de-centralized form, i.e. the procedure charging system 540 comprises the at least one procedure state tracking function 541 in de-centralized form with a procedure state tracking function module 541' integrated in the plurality of network functions 530, respectively. Together with the procedure charging tracking function 542, the procedure state tracking function 541 (realized by means of the de-centralized procedure state tracking function modules 541' integrated in the plurality of network functions 530) is part of the procedure charging system 540. In an analogous manner to Figure 3, Figure 4 shows, besides the user equipment 20 (having an N1 interface or reference point towards the core network instance 520, and a Uu interface or reference point towards the access network), the access network 110 (having an N2 interface or reference point towards the access and mobility management function of the core network interface 520, and an N3 interface or reference point towards the user plane function of the core network interface 520), and the data network 600 (having an N6 interface or reference point towards the core network interface 520), the core network instance 520 (of or used by the mobile communication network 100) and its main network functions 530 or components, namely: a network exchange function (NEF), having a procedure state tracking function module 541' and a Nnef interface or reference point; a policy and charging function (PCF), having a procedure state tracking function module 541' and a Npc interface or reference point; a unified data management (UDM), having a procedure state tracking function module 541' and a Nudm interface or reference point; a access and mobility management function (AMF), having a procedure state tracking function module 541' and a Namf interface or reference point; a session management function (SMF), having a procedure state tracking function module 541' and a Nsmf interface or reference point; and further network functions (NF-X, NF-Y), having, respectively a procedure state tracking function module 541' and Nnf-x and Nnf-y interfaces or reference points. According to the de-centralized form of the procedure state tracking function 541, the transmission of the procedure termination indication is realized by means of the respective procedure state tracking function module 541' receiving - upon the execution of procedures by the respective core network instance 520 and/or the respective network function 530 - the first procedure termination indication from the respective network function 530, and by means of the procedure state tracking function module 541' transmitting the second procedure termination indication to the procedure charging tracking function 542.

According to the present invention, the procedure charging tracking function 542 and the procedure state tracking function 541 compose the procedure charging system 540. The cloud provider (i.e. the cloud infrastructure 500) may use a single procedure charging system 540 per core network instance 520, 521, 522 or deploy independent procedure charging systems 540 for individual core network instances 520, 521, 522.

According to the present invention, a procedure termination indication is transmitted (typically by the respective network function 530) for each execution of procedures related to at least one specific kind of procedure (provided by the core network 120 or core network instance 520). Typically, a multitude of different kinds of procedures are taken into consideration here, however, what different procedures are thus treated (i.e. taken as relevant for charging, and, hence, need to be reported to the procedure charging system 540 and/or its components) is up to deployment. In any case, according to the present invention, one or, rather, a plurality out of the following "specific kinds of procedures" are considered relevant for charging:
UE registration (for 5G system, with support for 4G system),
UE registration with AMF re-allocation,
UE deregistration (UE-initiated and network-initiated),
UE triggered service request and network-triggered service request,
UE configuration update,
UE reachability notification request,
UE activity notification,
Access Network Release,
Network slice-specific authentication and authorization,
AAA Server triggered network slice-specific re-authentication,
AAA Server triggered Slice-specific Authorization revocation,
UE-triggered N3 data transfer establishment procedure,
SMF-triggered N3 data transfer establishment procedure,
UE-requested PDU session establishment (non-roaming, roaming with local breakout, home-routed roaming cases, IPv4 type, IPv4v6 type, IPv6 type, Ethernet type),
Secondary authorization/authentication by an DN-AAA server during PDU session establishment,
PDU session modification (non-roaming, roaming with local breakout, home-routed roaming case),
PDU session release (UE-request or network-requested),
Change of SSC mode,
Addition of additional PDU session anchor and branching point or Uplink Classifier,
Ethernet PDU session anchor relocation,
N4 session establishment,
N4 session modification,
N4 session release,
N4 association setup,
N4 association update,
N4 association release,
Intra-system handover (within 3GPP access, between untrusted/non-3GPP and 3GPP access),
N26-based idle mode mobility,
N26-based mobility registration,
EPS bearer allocation, transfer and revocation,
Mobile-originating and mobile-terminating SMF over NAS,
Network-induced location request,
Mobile-terminated location request,
Mobile-originated location request,
Immediate location request,
Deferred location request,
Network-assisted positioning,
AM Association establishment,
AM Association modification,
AM Association termination,
SM Association establishment,
SM Association modification,
SM Association termination,
UE Association establishment,
UE Association modification,
UE Association termination,
Use of cost output for analytics.

In Figures 5 to 8, additional examples of communication diagrams implementing or relating to the present invention are schematically shown.

In Figure 5, a user equipment registration procedure is schematically taken as an example to show how the initial network function, functionally processing an incoming message, is able to keep track of when a procedure (of a specific kind of procedure) is actually finalized, and, hence, the respective procedure termination indication needs to be transmitted to the procedure charging system 540 (typically involving the first procedure termination indication being sent from the respective network function 530 to the procedure state tracking function 541). The term "functionally processing" is used here because some network functions may just forward messages without processing them, e.g. non-access stratum messages going to the session management function via the access and mobility management function. The user equipment registration procedure involves the user equipment 20, the access network 110, the access and mobility management function AMF, the unified data management UDM, and the authentication function AUSF. In a first processing step 501 according to figure 5, a registration request is sent by the user equipment 20 to the access network 110. In a second processing step 502 according to figure 5, an AMF selection is performed. In a third processing step 503 according to figure 5, the registration request is transmitted by the access network 110 to the respective access and mobility management function AMF. In a fourth processing step 504 according to figure 5, the access and mobility management function AMF (as an example of the responsible network function 530 reporting - regarding the specific kind of procedure considered here, namely the user equipment registration procedure - to the procedure state tracking function 541 regarding the execution of the procedure) determines the user equipment registration procedure as being started or being processed. In a fifth processing step 505 according to figure 5, authentication is performed with the authentication function AUSF. In a sixth processing step 506 according to figure 5, an identity request is sent, by the access and mobility management function AMF, to the user equipment 20. In a seventh processing step 507 according to figure 5, an identity response is sent, by the user equipment 20, to the access and mobility management function, AMF. In an eighth processing step 508 according to figure 5, a UDM selection is performed. In a ninth processing step 509 according to figure 5, an AMF registration for the registered user equipment 20 at the unified data management UDM is performed. In a tenth processing step 510 according to figure 5, a get subscriber information is sent to the unified data management UDM. In an eleventh processing step 511 according to figure 5, a registration accept message is sent to the user equipment 20. In a twelfth processing step 512 according to figure 5, a registration complete message is sent, by the user equipment 20, to the access and mobility management function AMF. In a thirteenth processing step 513 according to figure 5, the user equipment registration procedure is finalized, and a respective first procedure termination indication (being specific to the specific kind of procedure just terminated, i.e. in the exemplary case represented in Figure 5, the user equipment registration procedure) is able to be sent from the respective network function 530 (i.e. the access and mobility management function AMF) to the procedure state tracking function 541 (or to the respective procedure state tracking function module 541').

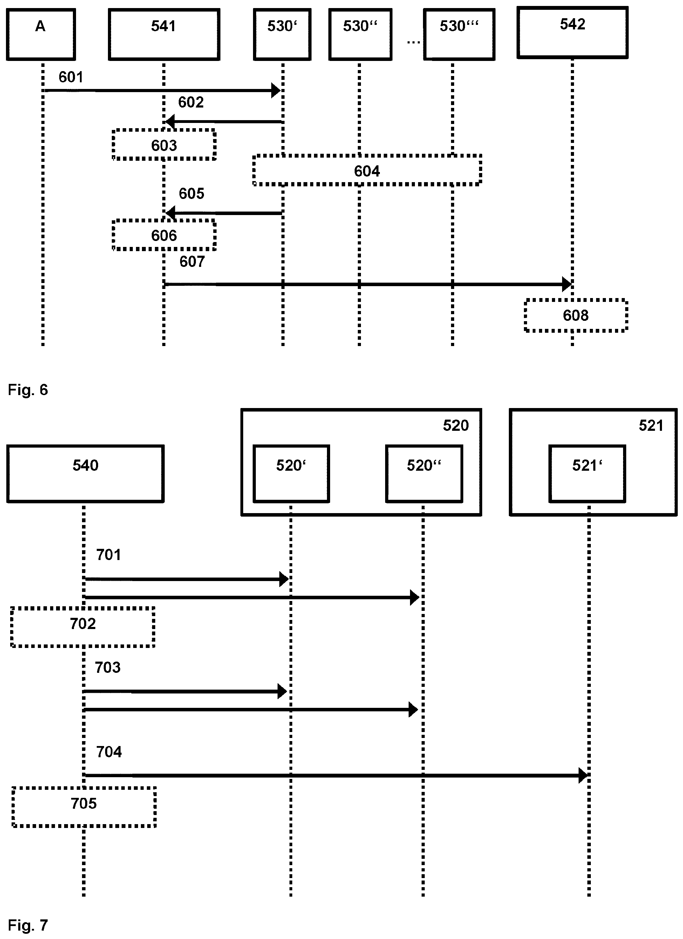

A corresponding communication diagram (as the one shown in Figure 5 for the example of the user equipment registration procedure) could be given for each procedure relevant for charging. For each such different (specific) kind of procedure, a different kind of procedure termination indication, and likewise, a different kind of first procedure termination indication (and of second procedure termination indication) will be generated by the respective network function 530 involved (and primarily responsible for the considered reporting to the procedure state tracking function 541). In the following, even though for all the possible different kinds of procedures (especially the ones mentioned above) a corresponding communication diagram as the one of Figure 5 is not presented here, the general principle is represented in Figure 6.

Hence, Figure 6, shows a more general representation of the communication, according to the present invention, between a procedure initiator A (e.g. the user equipment 20, but also any other component of the core network instance 520, especially a network function 530, and/or another connected component or entity), the procedure state tracking function 541, different network functions 530', 530", 530"', and the procedure charging tracking function 542.
In a first processing step 601 according to figure 6, a specific message is sent, by the procedure initiator A, to a network function 530, in the example of Figure 6 a first network function 530'. In a second processing step 602 according to figure 6, the specific message is identified, by the respective network function 530 (i.e. in the example of Figure 6, this happens at the first network function 530'), as being the first one of a kind of procedure (being a procedure (or an instance of a procedure) of a specific kind of procedure). According to the present invention, it is especially preferred that this detection is reported (by the respective network function 530 - i.e. in the example of Figure 6 the first network function 530') to the procedure state tracking function 541 as a procedure start indication, after which the respective procedure is registered, by the procedure state tracking function 541, as started or as in progress. In a third processing step 603 according to figure 6, the procedure is registered (by the procedure state tracking function 541) as started, and in a fourth processing step 604 according to figure 6, the message exchange occurs as per the respective procedure, i.e. between the first network function 530', the second network function 530", and the third network function 530"'. In a fifth processing step 605 according to figure 6, the last message of the specific kind of procedure is send, and this event or state is reported (by the respective network function 530 - i.e. in the example of Figure 6 the first network function 530') to the procedure state tracking function 541 as or by means of the first procedure termination indication. In a sixth processing step 606 according to figure 6, the considered procedure is finalized or registered as finalized such that, in a seventh processing step 607 according to figure 6, this event or state is reported (by the procedure state tracking function 541, or the respective procedure state tracking function module 541') to the procedure charging tracking function 542 as or by means of the second procedure termination indication. Especially, the second procedure termination indication from the procedure state tracking function 541 and from the procedure state tracking function modules 541' is dependent on the core network instance 520, 521 and/or dependent on the respective network slice used and/or dependent on the respective executed procedures. In an eighth processing step 608 according to figure 6, the charging value is calculated by the procedure charging tracking function 542.

Hence, by means of the first procedure termination indication (from the respective network function 530) and by means of the second procedure termination indication (from the procedure state tracking function 541 (or the procedure state tracking function module 541')), the procedure charging tracking function 542 is able to count - regarding each one of the thus monitored different specific kinds of procedures, and also dependent on the core network instance 520, 521, 522 and/or dependent on the respective network slice used (within the respective core network instance 520, 521, 522) - at least all the terminated procedures (especially also the successfully (non-erroneously) terminated and/or unsuccessfully terminated (or aborted)) having occurred. When the procedure start indication is transmitted to the procedure state tracking function 541 (and from there to the procedure charging tracking function 542), it is also possible to count the procedures started or initiated as well as the duration thereof.
Ultimately, the procedure charging tracking function 542 needs, then, to calculate the amount to be charged to the customer (or tenant) of the cloud infrastructure 500 for the performed procedures.

Such a price structure will typically need to take into account the specifics of procedures within a mobile communication network 100, especially within 5G core networks. While some procedures (e.g. PDU session establishment for a given network slice and payload type) do relate to a single slice within a 5G core instance 520, 521, 522, others (e.g. UE registration request requesting access to several slices) may relate to several slices simultaneously.
Provided that, typically, each customer (i.e. each core network instance 520, 521, 522) may be offered a different price, and each slice/slice combination within each core network instance 520, 521, 522 may have different quality-of-service and/or service level agreements (i.e. typically different prices), each procedure (i.e. each kind of procedure) has different levels of complexity and as such different computing costs which could be reflected in the amount to charge. Hence, the procedure costs that the procedure charging tracking function 542 needs to take into account (regarding a finalized procedure) thus is preferably dependent on one or a plurality out of the following:
-- the core network instance,
-- the slice combination used, and
-- the specific kind of the procedure performed.
In conventionally known charging methods, the charging procedure applied is typically based on just counting the number of end users using the cloud infrastructure; hence, according to the present invention, much finer-grained charging strategy is possible to implement.

Typically, a customer does not want to be only passively charged, but may also need to set cost limits, as well as a behavior to be executed in case the specified cost limit is exceeded. The procedure charging system 540 (and/or either the procedure state tracking function 541 or the procedure charging tracking function 542) is preferably able to perform actions on the core network, e.g. it may need to know what network functions within the core network it may need to contact (alternately, it may communicate with the core network's management system, but according to the present invention it also communicates directly with network functions); in order to realize this, the network repository function within each core network instance is able to be queried. This is schematically shown in Figure 7, showing a communication diagram between the procedure charging system 540, the core network instance 520 (with especially the network repository function 520' of its first network slice and the further network repository function 520" of its second network slice), and the further core network instance 521 (and the network repository function 521' of all of its network slices). Especially, this relates to the initial setup of the charging functionality according to the present invention.
In a first processing step 701 according to figure 7, the procedure charging system 540 queries network function profiles in the network repository functions 520', 520" of the core network instance 520. In a second processing step 702 according to figure 7, the network function to network slice mapping for the core network instance 520 is known to the procedure charging system 540. In a third processing step 703 according to figure 7, the procedure charging system 540 subscribes to network function profile changes. In a fourth processing step 704 according to figure 7, the procedure charging system 540 queries network function profiles in the network repository function 521' of the further core network instance 521. In a fifth processing step 705 according to figure 7, the network function to network slice mapping for the further core network instance 521 is known to the procedure charging system 540.

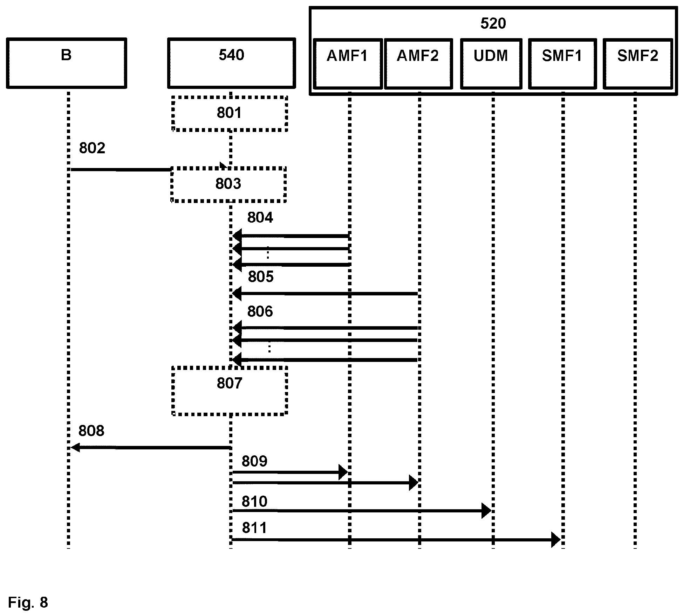

Additionally, a customer of the cloud infrastructure typically also wants to setup a limit for its contracted network. With regard to this, according to the present invention, the following is considered: If the limit for the specified slice(s) is exceeded, at least one out of the following steps are realized:
-- the respective customer is notified about the limit surpassing,
-- user equipment registration procedures for a specific network slice or network slices (with charging limit exceeded) and/or for a specific core network instance (with charging limit exceeded) are rejected,
-- subscriber access for a specific network slice or network slices (with charging limit exceeded) and/or for a specific core network instance (with charging limit exceeded) are disabled,
-- PDU sessions for a specific network slice or network slices (with charging limit exceeded) and/or for a specific core network instance (with charging limit exceeded) are released.
In the first of these cases, only a notification is required; however, in the orther cases, an interaction of the procedure charging system 540 with the respective core network instance (especially a 5G core instance) is required, either directly with the relevant network functions, or via the core network's (or, rather, core network instance's) management system. This means that, in a first processing step, the customer of the cloud infrastructure 500, transmits a spending limit information to the procedure charging system 540, especially a spending limit information taking into account, if applicable, different spending limits (or charging limits) for different network slices of the respective core network instance in question (of the customer). In a second processing step, the procedure charging system 540 takes into account such a spending limit information. An example of such a situation is schematically represented in Figure 8 which shows the communication diagram regarding the application (or implementation or enforcement) of such a charging limit situation between the cloud platform customer B, the procedure charging system 540, and an exemplary core network instance 520, having, in the exemplarily represented scenario of Figure 8, two network slices: a first network slice, and a second network slice. As components or network functions of the core network instance 520, the following network functions are specifically represented in Figure 8: a first access and mobility management function AMF1, processing only requests and procedures of or related to the first network slice; a second access and mobility management function AMF2, processing requests and procedures of or related to both the first network slice and the second network slice; a unified data management UDM, processing requests and procedures of or related to both the first network slice and the second network slice; a first session management function SMF1, processing only requests and procedures of or related to the first network slice; and a second session management function SMF2, processing only requests and procedures of or related to the second network slice

In a first processing step 801 according to figure 8, the accumulated costs for the first and second network slices are known to the procedure charging system 540. In a second processing step 802 according to figure 8, a cost limit regarding the first network slice is communicated (by the cloud platform customer B) to the procedure charging system 540. In a third processing step 803 according to figure 8, the request regarding the implementation of a cost limit is mapped to the core network instance 520, and the procedure charging system 540 receives a certain number of procedure termination indications (and/or of second procedure termination indications) received from the respective network functions 530. In the exemplary embodiment shown in Figure 8 (with the core network instance 520 having a first and a second network slice), the following (second) procedure termination indications are received by the procedure charging system 540: In a fourth processing step 804 according to figure 8, one or a plurality of (second) procedure termination indications regarding the first network slice from the first access and mobility management function AMF1; in a fifth processing step 805 according to figure 8, one or a plurality of (second) procedure termination indications regarding the first network slice or the second network slice from the second access and mobility management function AMF2 (being responsible for both the first and the second network slice); in a sixth processing step 806 according to figure 8, one or a plurality of (second) procedure termination indications regarding the second network slice from the second access and mobility management function AMF2. In a seventh processing step 807 according to figure 8, the payload communication data 540 determines that the charging limit for the first network slice of core network instance 520 is reached and/or exceeded which results in the respective actions of an eighths, a ninth, a tenth, and an eleventh processing step: In the eighth processing step 808 according to figure 8, the cloud platform customer B is notified that the charging limit for the first network slice of core network instance 520 is reached and/or exceeded; in the ninth processing step 809 according to figure 8, user equipment registration procedures relating to the first network slice are rejected, i.e. a corresponding notification or message is sent, by the procedure charging system 540, both to the first and second access and mobility management functions AMF1, AMF2 (as the assumption was that both are, at least partly, responsible for the first network slice); in a tenth processing step 810 according to figure 8, the subscriber access to the first network slice is disabled, i.e. a corresponding notification or message is sent, by the procedure charging system 540, to the unified data management UDM; and in the eleventh processing step 811 according to figure 8, PDU sessions of or relating to the first network slice are released, i.e. a corresponding notification or message is sent, by the procedure charging system 540, to the first session management function SMF1. These processing steps reflect, that - in case that a charging limit regarding a network slice is reached or exceeded - only network functions being responsible for the specified network slice(s) need to be contacted by the procedure charging system 540 (network function instances may serve one network slice, several network slices or all network slices).

According to the present invention, it is advantageously possible to realize a procedure parametrization regarding considered procedures: The procedures that the procedure state tracking function 541 recognizes are able to be configured by an external entity (e.g. the system administrator). In this respect, the sequence of messages comprising a procedure is mapped in the procedure state tracking function 541 to a specific procedure, hence the first procedure termination indication (sent by the respective network functions 530) is realized in the form of such a detection by the procedure state tracking function 541.

The information provided by one or more procedure charging system 540 is able to be used to perform cost analysis on a procedure-based basis including, but not limited to cost over time and cost predictions based on the generated costs over a given period of time. This is possible to be made on a per-customer basis, per-slice basis or aggregated (e.g. slices with similar characteristics).

Hence, according to the present invention, a method is provided which is applicable to a cloud-based, multi-tenant-capable (i.e. comprising several core network instances 520, 521, 522), multi-slice-capable (i.e. several network slices per core network instance 520, 521, 522 are possible) cloud infrastructure being able to deploy one or a plurality of network core instances, especially 5G core instances, and in which network functions notify the procedure charging system 540 of completed procedures (by means of the procedure termination indication). One such procedure typically consists of a series of API calls and/or message exchanges between different network functions 530 starting and ending at a specific network functions 530. It is that specific network function 530 which notifies the procedure charging system 540 of the completion of the procedure. The corresponding procedure completion messages (i.e. the procedure termination indications) include at least:
-- the network ID (e.g. PLMN ID for the case of public networks and PLMN ID and Network ID, NID, for private networks) of the respective core network instance 520, 521, 522,
-- the slice combination of the procedure (e.g. a PDU session establishment belongs to a single network slice but a user equipment registration can be performed for multiple network slices simultaneously),
-- procedure ID (or procedure identifier information) of the completed procedure(s). The list of procedures that typically needs at least to be covered is provided above,
-- procedure options: Classification-relevant so that a given procedure can be univocally classified for charging purposes, e.g. for a PDU session the type of PDU session being established (IPv4, IPv6, Ethernet, ...) and whether the PDU session is of roaming type and if yes, what roaming is applied (e.g. home routed, local breakout).

According to the present invention, the procedure state tracking function 541 especially takes as inputs incoming/outgoing messages from a given network function and signals whether a procedure start or completion occurred, especially to the procedure charging tracking function 542. The procedure charging tracking function 542 takes as inputs the (number of) finalized procedures and the procedure costs (which is itself dependent on the network instance, the network slice combination and the procedure) and outputs an amount to charge per performed procedures.
Furthermore, especially, the procedure charging function 540 initially obtains, for each core network instance, a network function-to-slice mapping from the core network instance's network repository functions (the network functions may support one network slice or a combination of network slices identified by a NSSAI (Network Slice Selection Assistance Information) or list of S-NSSAls (Single Network Slice Selection Assistance Information).
Furthermore especially, the inventive method is applicable to a network in which a customer of the cloud platform (or cloud infrastructure 500) - e.g. a mobile network operator paying for a core network instance - can specify a cost limit for a given network slice or combination or network slices via the procedure charging system 540, as well as specify the behavior the cloud provider (or the cloud infrastructure 500) should apply when the cost is exceeded or surpassed, which mainly includes to notify the reaching (or surpassing) of a limit and/or to reject user equipment registration procedures for the specified network slice(s) and/or to disable subscriber access for the specified network slice(s) and/or the release of PDU sessions for the specified network slice(s). Furthermore according to the second alternative of the present invention, the procedure state tracking function 541 is integrated within a network function so that the network function directly signals towards the procedure charging tracking function 542 (de-centralized embodiment).
It is furthermore preferred according to the present invention that the procedure charging tracking function 542 is parametrized by means of sending, to the procedure charging tracking function 542, a mapping between a sequence of messages and a procedure so that the start and end of the procedure in question can be detected.
Additionally, it is preferred according to the present invention that the output of one or more procedure charging systems 540 is used to generate analytics on the generated costs, such as costs over time and cost predictions; this is preferably performed on a per-customer basis, per-slice basis or on an aggregated basis (e.g. regarding network slices with similar characteristics).

## Claims

1. Method for providing improved charging capabilities regarding at least one mobile communication network (100, 200, 300) whose functionality is at least partly provided by means of a cloud infrastructure (500), wherein the at least one mobile communication network (100) comprises a radio access network (110) and a core network (120), the core network (120) being realized as a core network instance (520) provided by the cloud infrastructure (500), the core network instance (520) comprising a plurality of network functions (530), wherein the cloud infrastructure (500) and/or the core network instance (520) comprise a procedure charging system (540), the procedure charging system (540) enabling the improved charging capabilities by means of detecting, regarding at least one specific kind of procedure provided by the core network (120), the execution of procedures by the core network instance (520), wherein the procedure charging system (540) comprises a procedure charging tracking function (542) and at least one procedure state tracking function (541), wherein the procedure charging system (540) comprises the procedure state tracking function (541) either in centralized form or in a de-centralized form with a procedure state tracking function module (541') integrated in a plurality of network functions (530), respectively,
wherein the method comprises the step of the procedure state tracking function (541) or the procedure state tracking function module (541') receiving a procedure start indication from the respective network function (530), after which the respective procedure is registered as started or as in progress, wherein the method further comprises the step of the core network instance (520) transmitting a procedure termination indication to the procedure charging system (540), wherein the procedure termination indication is related to the specific kind of procedure, wherein the transmission of the procedure termination indication is realized by means of the procedure state tracking function (541) or the procedure state tracking function module (541') receiving - upon the execution of procedures by the core network instance (520) and/or one or a plurality of its network functions (530) - a first procedure termination indication from the respective network function (530), and by means of the procedure state tracking function (541) or the procedure state tracking function module (541') transmitting a second procedure termination indication to the procedure charging tracking function (542).

2. Method according to claim 1, wherein
-- besides the core network (120), at least one further core network (220) of a further mobile communication network (200) is realized as the core network instance (520), or wherein
-- the cloud infrastructure (500) provides - besides the core network instance (520) - at least one further core network instance (521), the further core network instance (521) realizing at least one further core network (220) of a further mobile communication network (200), wherein the procedure termination indication is related to - besides the specific kind of procedure - the respective core network instance (520, 521),
wherein especially the core network (120) employs, besides a first network slice, at least a second network slice, and/or especially the further core network (220) employs, besides a third network slice, at least one fourth network slice, wherein the procedure termination indication is related to - besides the specific kind of procedure - the respective core network instance (520, 521) and/or to the respective network slice.

3. Method according to one of the preceding claims, wherein
-- either the cloud infrastructure (500) comprises the procedure charging system (540), and the procedure charging system (540) processes a plurality of procedure termination indications related to both the core network instance (520) and the further core network instance (521),
-- or the core network instance (520) comprises the procedure charging system (540) and the further core network instance (521) comprises a further procedure charging system,
-- or different procedure charging systems are used for different network slices of the core network instance (520) and/or of the further core network instance (521).

4. Method according to one of the preceding claims, wherein in order for the procedure charging system (540), especially the procedure charging tracking function (542), to provide charging information and/or an amount information, the procedure charging tracking function (542) receives:
-- the second procedure termination indication from the procedure state tracking function (541) and/or from the procedure state tracking function modules (541') regarding the respective executed procedures, as well as
-- procedure cost information, especially as dependent on the core network instance (520, 521) and/or dependent on the respective network slice used and/or dependent on the respective executed procedures.

5. Method according to one of the preceding claims, wherein in order for the procedure charging system (540), especially the procedure charging tracking function (542), to apply cost limits, the procedure charging system (540) and/or the procedure charging tracking function (542) triggers
-- the rejection of requested procedures and/or
-- the rejection or disabling of user equipments to access a core network instance or a network slice thereof and/or
-- the release of protocol data unit sessions, PDU sessions, regarding a core network instance or a network slice thereof,
especially after a predefined cost limit regarding a core network instance or a network slice thereof has been detected to be exceeded by the procedure charging system (540).

6. Procedure charging system (540) for providing improved charging capabilities regarding at least one mobile communication network (100, 200, 300) whose functionality is at least partly provided by means of a cloud infrastructure (500), wherein the at least one mobile communication network (100) comprises a radio access network (110) and a core network (120), the core network (120) being realized as a core network instance (520) provided by the cloud infrastructure (500), the core network instance (520) comprising a plurality of network functions (530), wherein the cloud infrastructure (500) and/or the core network instance (520) comprise the procedure charging system (540), the procedure charging system (540) enabling the improved charging capabilities by means of detecting, regarding at least one specific kind of procedure provided by the core network (120), the execution of procedures by the core network instance (520), wherein the procedure charging system (540) comprises a procedure charging tracking function (542) and at least one procedure state tracking function (541), wherein the procedure charging system (540) comprises the procedure state tracking function (541) either in centralized form or in a de-centralized form with a procedure state tracking function module (541') integrated in a plurality of network functions (530), respectively,
wherein the procedure charging system (540) is configured such that the procedure state tracking function (541) or the procedure state tracking function module (541') receive a procedure start indication from the respective network function (530), after which the respective procedure is registered as started or as in progress, wherein the procedure charging system (540) is further configured such that the core network instance (520) transmit a procedure termination indication to the procedure charging system (540), wherein the procedure termination indication is related to the specific kind of procedure, wherein the transmission of the procedure termination indication is realized by means of the procedure state tracking function (541) or the procedure state tracking function module (541') being configured to receive - upon the execution of procedures by the core network instance (520) and/or one or a plurality of its network functions (530) - a first procedure termination indication from the respective network function (530), and by means of the procedure state tracking function (541) or the procedure state tracking function module (541') being configured to transmit a second procedure termination indication to the procedure charging tracking function (542).

7. Cloud infrastructure (500) comprising a procedure charging system (540) according to claim 6.

8. Mobile communication network (100), the functionality of which is at least partly provided by means of a cloud infrastructure (500) according to claim 7.

9. Program comprising a computer readable program code, which, when executed on a computer and/or on a network node of a cloud infrastructure (500) and/or on a network function (530) and/or on a procedure charging system (540), or in part on a network node of a cloud infrastructure (500) and/or in part on a network function (530) and/or in part on a procedure charging system (540), causes the computer and/or the cloud infrastructure (500) and/or the network function (530) and/or the procedure charging system (540) to perform a method according one of claims 1 to 5.

10. Computer-readable medium comprising instructions which when executed on a computer and/or on a network node of a cloud infrastructure (500) and/or on a network function (530) and/or on a procedure charging system (540), or in part on a network node of a cloud infrastructure (500) and/or in part on a network function (530) and/or in part on a procedure charging system (540), causes the computer and/or the cloud infrastructure (500) and/or the network function (530) and/or the procedure charging system (540) to perform a method according one of claims 1 to 5.

## Patentansprüche

1. Verfahren zur Bereitstellung verbesserter Abrechnungsmöglichkeiten für mindestens ein Mobilfunkkommunikationsnetz (100, 200, 300), dessen Funktionalität zumindest teilweise mittels einer Cloud-Infrastruktur (500) bereitgestellt wird, wobei das mindestens eine Mobilfunkkommunikationsnetz (100) ein Funkzugangsnetz (110) und ein Kernnetz (120) umfasst, wobei das Kernnetz (120) als eine von der Cloud-Infrastruktur (500) bereitgestellte Kernnetzinstanz (520) realisiert ist, wobei die Kernnetzinstanz (520) mehrere Netzfunktionen (530) umfasst, wobei die Cloud-Infrastruktur (500) und/oder die Kernnetzinstanz (520) ein Prozedurabrechnungssystem (540) umfassen, wobei das Prozedurabrechnungssystem (540) die verbesserten Abrechnungsfähigkeiten ermöglicht, indem es in Bezug auf mindestens eine spezifische Art von Prozedur, die von dem Kernnetz (120) bereitgestellt wird, die Ausführung von Prozeduren durch die Kernnetzinstanz (520) erkennt, wobei das Prozedurabrechnungssystem (540) eine Prozedurabrechnungs-Verfolgungsfunktion (542) und mindestens eine Prozedurzustands-Verfolgungsfunktion (541) umfasst, wobei das Prozedurabrechnungssystem (540) die Prozedurzustands-Verfolgungsfunktion (541) entweder in zentralisierter Form oder in dezentralisierter Form mit einem Prozedurzustands-Verfolgungsfunktionsmodul (541') integriert in einer Vielzahl von Netzfunktionen (530) umfasst,
wobei das Verfahren den Schritt umfasst, dass die Prozedurzustands-Verfolgungsfunktion (541) oder das Prozedurzustands-Verfolgungsfunktionsmodul (541') eine Prozedurstart-Indikation von der jeweiligen Netzfunktion (530) empfängt, woraufhin die jeweilige Prozedur als gestartet oder als in Bearbeitung registriert wird, wobei das Verfahren ferner den Schritt umfasst, dass die Kernnetzinstanz (520) eine Prozedurbeendigungs-Indikation an das Prozedurabrechnungssystem (540) überträgt, wobei die Prozedurbeendigungs-Indikation sich auf die spezifische Art der Prozedur bezieht, wobei die Übertragung der Prozedurbeendigungs-Indikation dadurch realisiert wird, dass die Prozedurzustands-Verfolgungsfunktion (541) oder das Prozedurzustands-Verfolgungsfunktionsmodul (541') - bei der Ausführung von Prozeduren durch die Kernnetzinstanz (520) und/oder einer oder mehreren seiner Netzfunktionen (530) - eine erste Prozedurbeendigungs-Indikation von der jeweiligen Netzfunktion (530) empfängt, und mittels der Prozedurzustands-Verfolgungsfunktion (541) oder des Prozedurzustands-Verfolgungsfunktionsmoduls (541') eine zweite Prozedurbeendigungs-Indikation an die Prozedurabrechnungs-Verfolgungsfunktion (542) überträgt.

2. Verfahren nach Anspruch 1, wobei
-- neben dem Kernnetz (120) mindestens ein weiteres Kernnetz (220) eines weiteren Mobilfunkkommunikationsnetzes (200) als Kernnetzinstanz (520) realisiert ist, oder wobei
-- die Cloud-Infrastruktur (500) - neben der Kernnetzinstanz (520) - mindestens eine weitere Kernnetzinstanz (521) bereitstellt, wobei die weitere Kernnetzinstanz (521) mindestens ein weiteres Kernnetz (220) eines weiteren Mobilfunkkommunikationsnetzes (200) realisiert, wobei die Verfahrensbeendigungs-Indikation - neben der spezifischen Verfahrensart - der jeweiligen Kernnetzinstanz (520, 521) zugeordnet ist, wobei insbesondere das Kernnetz (120) neben einem ersten Netzausschnitt mindestens einen zweiten Netzausschnitt, und/oder insbesondere das weitere Kernnetz (220) neben einem dritten Netzausschnitt mindestens einen vierten Netzausschnitt verwendet, wobei die Prozedurbeendigungs-Indikation - neben der spezifischen Art der Prozedur - auf die jeweilige Kernnetzinstanz (520, 521) und/oder auf den jeweiligen Netzausschnitt bezogen ist.

3. Verfahren nach einem der vorstehenden Ansprüche, wobei
-- entweder die Cloud-Infrastruktur (500) das Prozedurabrechnungssystem (540) umfasst und das Prozedurabrechnungssystem (540) mehrere Prozedurbeendigungs-Indikationn verarbeitet, die sowohl auf die Kernnetzinstanz (520) als auch auf die weitere Kernnetzinstanz (521) bezogen sind,
-- oder die Kernnetzinstanz (520) das Prozedurabrechnungssystem (540) umfasst und die weitere Kernnetzinstanz (521) ein weiteres Prozedurabrechnungssystem umfasst,
-- oder unterschiedliche Prozedurabrechnungssysteme für unterschiedliche Netzschnitte der Kernnetzinstanz (520) und/oder der weiteren Kernnetzinstanz (521) verwendet werden.

4. Verfahren nach einem der vorstehenden Ansprüche, wobei, damit das Prozedurabrechnungssystem (540), insbesondere die Prozedurabrechnungs-Verfolgungsfunktion (542), Abrechnungsinformationen und/oder eine Betragsinformation bereitstellen kann, die Prozedurabrechnungs-Verfolgungsfunktion (542) empfängt:
-- die zweite Prozedurbeendigungs-Indikation von der Prozedurzustands-Verfolgungsfunktion (541) und/oder von den Prozedurzustands-Verfolgungsfunktionsmodulen (541') bezüglich der jeweils ausgeführten Prozeduren, sowie
-- Prozedurkosteninformationen, insbesondere in Abhängigkeit von der Kernnetzinstanz (520, 521) und/oder in Abhängigkeit von dem jeweils verwendeten Netzschlitz und/oder in Abhängigkeit von den jeweils ausgeführten Prozeduren.

5. Verfahren nach einem der vorstehenden Ansprüche, wobei, damit das Prozedurabrechnungssystem (540), insbesondere die Prozedurabrechnungs-Verfolgungsfunktion (542), Kostenlimits anwenden kann, das Prozedurabrechnungssystem (540) und/oder die Prozedurabrechnungs-Verfolgungsfunktion (542)
-- die Ablehnung angeforderter Prozeduren und/oder
-- die Ablehnung oder Deaktivierung von Benutzergeräten für den Zugang zu einer Kernnetzinstanz oder einem Netzschlitz davon und/oder
-- die Freigabe von Protokolldateneinheitssitzungen (PDU Sessions) bezüglich einer Kernnetzinstanz oder eines Netzschlitzes davon,
insbesondere nachdem eine vordefinierte Kostenbegrenzung bezüglich einer Kernnetzinstanz oder eines Netzschlitzes davon durch das Prozedurabrechnungssystem (540) als überschritten erkannt wurde.

6. Prozedurabrechnungssystem (540) zur Bereitstellung verbesserter Abrechnungsfähigkeiten bezüglich mindestens eines Mobilfunkkommunikationsnetzes (100, 200, 300), dessen Funktionalität zumindest teilweise mittels einer Cloud-Infrastruktur (500) bereitgestellt wird, wobei das mindestens eine Mobilfunkkommunikationsnetz (100) ein Funkzugangsnetz (110) und ein Kernnetz (120) umfasst, wobei das Kernnetz (120) als eine von der Cloud-Infrastruktur (500) bereitgestellte Kernnetzinstanz (520) realisiert ist, wobei die Kernnetzinstanz (520) eine Vielzahl von Netzfunktionen (530) umfasst, wobei die Cloud-Infrastruktur (500) und/oder die Kernnetzinstanz (520) das Prozedurabrechnungssystem (540) umfassen, wobei das Prozedurabrechnungssystem (540) die verbesserten Abrechnungsfähigkeiten ermöglicht, indem es in Bezug auf mindestens eine spezifische Art von Prozedur, die von dem Kernnetz (120) bereitgestellt wird, die Ausführung von Prozeduren durch die Kernnetzinstanz (520) erfasst, wobei das Prozedurabrechnungssystem (540) eine Prozedurabrechnungsverfolgungsfunktion (542) und mindestens eine Prozedurzustands-Verfolgungsfunktion (541) umfasst, wobei das Prozedurabrechnungssystem (540) die Prozedurzustands-Verfolgungsfunktion (541) entweder in zentralisierter Form oder in dezentralisierter Form mit einem in mehrere Netzfunktionen (530) integrierten Prozedurzustands-Verfolgungsfunktionsmodul (541') umfasst,
wobei das Prozedurabrechnungssystem (540) derart konfiguriert ist, dass die Prozedurzustands-Verfolgungsfunktion (541) oder das Prozedurzustands-Verfolgungsfunktionsmodul (541') eine Prozedurstart-Indikation von der jeweiligen Netzfunktion (530) empfängt, woraufhin die jeweilige Prozedur als gestartet oder als in Bearbeitung registriert wird, wobei das Prozedurabrechnungssystem (540) ferner derart konfiguriert ist, dass die Kernnetzinstanz (520) eine Prozedurbeendigungs-Indikation an das Prozedurabrechnungssystem (540) überträgt, wobei die Prozedurbeendigungs-Indikation sich auf die spezifische Art der Prozedur bezieht, wobei die Übertragung der Prozedurbeendigungs-Indikation dadurch realisiert wird, dass die Prozedurzustands-Verfolgungsfunktion (541) oder das Prozedurzustands-Verfolgungsfunktionsmodul (541') so konfiguriert ist, dass es - bei der Ausführung von Prozeduren durch die Kernnetzinstanz (520) und/oder einer oder mehreren ihrer Netzfunktionen (530) - eine erste Prozedurbeendigungs-Indikation von der jeweiligen Netzfunktion (530) empfängt, und dadurch, dass die Prozedurzustands-Verfolgungsfunktion (541) oder das Prozedurzustands-Verfolgungsfunktionsmodul (541') so konfiguriert ist, dass es eine zweite Prozedurbeendigungs-Indikation an die Prozedurabrechnungs-Verfolgungsfunktion (542) überträgt.

7. Cloud-Infrastruktur (500) mit einem Prozedurabrechnungssystem (540) nach Anspruch 6.

8. Mobilfunkkommunikationsnetz (100) nach Anspruch 7, dessen Funktionalität zumindest teilweise mittels einer Cloud-Infrastruktur (500) bereitgestellt wird.

9. Programm mit einem computerlesbaren Programmcode, der bei Ausführung auf einem Computer und/oder auf einem Netzwerkknoten einer Cloud-Infrastruktur (500) und/oder auf einer Netzfunktion (530) und/oder auf einem Prozedurabrechnungssystem (540) oder teilweise auf einem Netzwerkknoten einer Cloud-Infrastruktur (500) und/oder teilweise auf einer Netzfunktion (530) und/oder teilweise auf einem Prozedurabrechnungssystem (540) eine der folgenden Funktionen ausführt (500) und/oder teilweise auf einer Netzfunktion (530) und/oder teilweise auf einem Prozedurabrechnungssystem (540) ausgeführt wird, bewirkt, dass der Computer und/oder die Cloud-Infrastruktur (500) und/oder die Netzfunktion (530) und/oder das Prozedurabrechnungssystem (540) ein Verfahren gemäß einem der Ansprüche 1 bis 5 ausführt.

10. Computerlesbares Medium, das Anweisungen umfasst, die, wenn sie auf einem Computer und/oder auf einem Netzwerkknoten einer Cloud-Infrastruktur (500) und/oder auf einer Netzfunktion (530) und/oder auf einem Prozedurabrechnungssystem (540) oder teilweise auf einem Netzwerkknoten einer Cloud-Infrastruktur (500) und/oder teilweise auf einer Netzfunktion (530) und/oder teilweise auf einem Prozedurabrechnungssystem (540) ausgeführt werden, den Computer und/oder die Cloud-Infrastruktur (500) und/oder die Netzfunktion (530) und/oder das Prozedurabrechnungssystem (540) veranlassen, ein Verfahren gemäß einem der Ansprüche 1 bis 5 auszuführen (540) bewirken, dass der Computer und/oder die Cloud-Infrastruktur (500) und/oder die Netzfunktion (530) und/oder das Prozedurabrechnungssystem (540) ein Verfahren gemäß einem der Ansprüche 1 bis 5 ausführen.

## Revendications

1. Procédé pour fournir des capacités de facturation améliorées concernant au moins un réseau de communication mobile (100, 200, 300) dont la fonctionnalité est au moins partiellement fournie au moyen d'une infrastructure en nuage (500), dans lequel le au moins un réseau de communication mobile (100) comprend un réseau d'accès radio (110) et un réseau central (120), le réseau central (120) étant réalisé sous la forme d'une instance de réseau central (520) fournie par l'infrastructure en nuage (500), l'instance de réseau central (520) comprenant une pluralité de fonctions de réseau (530), dans lequel l'infrastructure en nuage (500) et/ou l'instance de réseau central (520) comprennent un système de facturation de procédures (540), le système de facturation de procédures (540) permettant les capacités de facturation améliorées au moyen de la détection, concernant au moins un type spécifique de procédure fourni par le réseau central (120), de l'exécution de procédures par l'instance de réseau central (520), dans lequel le système de facturation de procédures (540) comprend une fonction de suivi de facturation de procédure (542) et au moins une fonction de suivi d'état de procédure (541), dans lequel le système de facturation de procédure (540) comprend la fonction de suivi d'état de procédure (541) soit sous une forme centralisée, soit sous une forme décentralisée avec un module de fonction de suivi d'état de procédure (541') intégré dans une pluralité de fonctions réseau (530), respectivement,
dans lequel le procédé comprend l'étape consistant en ce que la fonction de suivi d'état de procédure (541) ou le module de fonction de suivi d'état de procédure (541') reçoit une indication de début de procédure de la fonction réseau respective (530), après quoi la procédure respective est enregistrée comme ayant commencé ou en cours,
dans lequel le procédé comprend en outre l'étape consistant en ce que l'instance de réseau central (520) transmettant une indication de fin de procédure au système de facturation de procédures (540), dans lequel l'indication de fin de procédure est liée au type spécifique de procédure, dans lequel la transmission de l'indication de fin de procédure est réalisée au moyen de la fonction de suivi de l'état de procédure (541) ou du module de fonction de suivi de l'état de procédure (541') recevant - lors de l'exécution de procédures par l'instance de réseau central (520) et/ou une ou plusieurs de ses fonctions réseau (530) - une première indication de fin de procédure provenant de la fonction réseau respective (530), et au moyen de la fonction de suivi de l'état de procédure (541) ou du module de fonction de suivi de l'état de procédure (541') transmettant une deuxième indication de fin de procédure à la fonction de suivi de facturation de la procédure (542).

2. Procédé selon la revendication 1, dans lequel
-- outre le réseau central (120), au moins un autre réseau central (220) d'un autre réseau de communication mobile (200) est réalisé en tant qu'instance de réseau central (520), ou dans lequel
-- l'infrastructure en nuage (500) fournit - outre l'instance de réseau central (520) - au moins une autre instance de réseau central (521), l'instance de réseau central supplémentaire (521) réalisant au moins un réseau central supplémentaire (220) d'un réseau de communication mobile supplémentaire (200), dans lequel l'indication de fin de procédure est liée, outre au type spécifique de procédure, à l'instance de réseau central respective (520, 521),
dans lequel le réseau central (120) utilise notamment, outre une première tranche de réseau, au moins une deuxième tranche de réseau, et/ou en particulier le réseau central supplémentaire (220) utilise, outre une troisième tranche de réseau, au moins une quatrième tranche de réseau, dans lequel l'indication de fin de procédure est liée, outre au type spécifique de procédure, à l'instance de réseau central respective (520, 521) et/ou à la tranche de réseau respective.

3. Procédé selon l'une des revendications précédentes, dans lequel
-- soit l'infrastructure en nuage (500) comprend le système de facturation de procédure (540), et le système de facturation de procédure (540) traite une pluralité d'indications de fin de procédure relatives à la fois à l'instance de réseau central (520) et à l'autre instance de réseau central (521),
-- soit l'instance de réseau central (520) comprend le système de facturation de procédure (540) et l'autre instance de réseau central (521) comprend un autre système de facturation de procédure,
-- soit différents systèmes de facturation de procédure sont utilisés pour différentes tranches de réseau de l'instance de réseau central (520) et/ou de l'autre instance de réseau central (521).

4. Procédé selon l'une des revendications précédentes, dans lequel, pour que le système de facturation de procédure (540), en particulier la fonction de suivi de facturation de procédure (542), fournisse des informations de facturation et/ou des informations de montant, la fonction de suivi de facturation de procédure (542) reçoit :
-- la deuxième indication de fin de procédure provenant de la fonction de suivi de l'état de la procédure (541) et/ou des modules de la fonction de suivi de l'état de la procédure (541') concernant les procédures respectives exécutées, ainsi que
-- des informations sur le coût de la procédure, en particulier en fonction de l'instance du réseau central (520, 521) et/ou en fonction de la tranche de réseau respective utilisée et/ou en fonction des procédures respectives exécutées.

5. Procédé selon l'une des revendications précédentes, dans lequel, pour que le système de facturation de procédures (540), en particulier la fonction de suivi de facturation de procédures (542), applique des limites de coût, le système de facturation de procédures (540) et/ou la fonction de suivi de facturation de procédures (542) déclenche
-- le rejet de procédures demandées et/ou
-- le rejet ou la désactivation des équipements utilisateurs pour accéder à une instance de réseau central ou à une tranche de réseau de celle-ci et/ou
-- la libération de sessions d'unité de données de protocole (protocol data unit sessions), sessions PDU, concernant une instance de réseau central ou une tranche de réseau de celle-ci, en particulier après qu'une limite de coût prédéfinie concernant une instance de réseau central ou une tranche de réseau de celle-ci a été détectée comme étant dépassée par le système de facturation de procédures (540).

6. Système de facturation de procédures (540) pour fournir des capacités de facturation améliorées concernant au moins un réseau de communication mobile (100, 200, 300) dont la fonctionnalité est au moins partiellement fournie au moyen d'une infrastructure en nuage (500), dans lequel le au moins un réseau de communication mobile (100) comprend un réseau d'accès radio (110) et un réseau central (120), le réseau central (120) étant réalisé sous la forme d'une instance de réseau central (520) fournie par l'infrastructure en nuage (500), l'instance de réseau central (520) comprenant une pluralité de fonctions de réseau (530), dans lequel l'infrastructure en nuage (500) et/ou l'instance de réseau central (520) comprennent le système de facturation de procédures (540), le système de facturation de procédures (540) permettant les capacités de facturation améliorées au moyen de la détection, concernant au moins un type spécifique de procédure fourni par le réseau central (120), de l'exécution de procédures par l'instance de réseau central (520), dans lequel le système de facturation de procédures (540) comprend une fonction de suivi de facturation de procédure (542) et au moins une fonction de suivi d'état de procédure (541), dans lequel le système de facturation de procédure (540) comprend la fonction de suivi d'état de procédure (541) soit sous une forme centralisée, soit sous une forme décentralisée avec un module de fonction de suivi d'état de procédure (541') intégré dans une pluralité de fonctions réseau (530), respectivement, dans lequel le système de facturation de procédure (540) est configuré de telle sorte que la fonction de suivi d'état de procédure (541) ou le module de fonction de suivi d'état de procédure (541') reçoive une indication de début de procédure de la fonction réseau respective (530), après quoi la procédure respective est enregistrée comme ayant commencé ou en cours, dans lequel le système de facturation de procédure (540) est en outre configuré de telle sorte que l'instance de réseau central (520) transmet une indication de fin de procédure au système de facturation de procédure (540), dans lequel l'indication de fin de procédure est liée au type spécifique de procédure, dans lequel la transmission de l'indication de fin de procédure est réalisée au moyen de la fonction de suivi de l'état de procédure (541) ou du module de fonction de suivi de l'état de procédure (541') étant configuré pour recevoir -lors de l'exécution de procédures par l'instance de réseau central (520) et/ou une ou plusieurs de ses fonctions réseau (530) - une première indication de fin de procédure provenant de la fonction réseau respective (530), et au moyen de la fonction de suivi de l'état de procédure (541) ou du module de fonction de suivi de l'état de procédure (541') configuré pour transmettre une deuxième indication de fin de procédure à la fonction de suivi de la facturation de la procédure (542).

7. Infrastructure en nuage (500) comprenant un système de facturation de procédure (540) selon la revendication 6.

8. Réseau de communication mobile (100), dont la fonctionnalité est au moins partiellement fournie au moyen d'une infrastructure en nuage (500) selon la revendication 7.

9. Programme comprenant un code de programme lisible par ordinateur qui, lorsqu'il est exécuté sur un ordinateur et/ou sur un noeud de réseau d'une infrastructure en nuage (500) et/ou sur une fonction de réseau (530) et/ou sur un système de facturation de procédure (540), ou en partie sur un noeud de réseau d'une infrastructure en nuage (500) et/ou en partie sur une fonction réseau (530) et/ou en partie sur un système de facturation de procédures (540), amène l'ordinateur et/ou l'infrastructure en nuage (500) et/ou la fonction réseau (530) et/ou le système de facturation de procédures (540) à exécuter un procédé selon l'une des revendications 1 à 5.

10. Support lisible par ordinateur comprenant des instructions qui, lorsqu'elles sont exécutées sur un ordinateur et/ou sur un noeud de réseau d'une infrastructure en nuage (500) et/ou sur une fonction de réseau (530) et/ou sur un système de facturation de procédure (540), ou en partie sur un noeud de réseau d'une infrastructure en nuage (500) et/ou en partie sur une fonction de réseau (530) et/ou en partie sur un système de facturation de procédure (540), amène l'ordinateur et/ou l'infrastructure en nuage (500) et/ou la fonction réseau (530) et/ou le système de facturation de procédure (540) à exécuter un procédé selon l'une des revendications 1 à 5
